(19) Europäisches Patentamt

European Patent Office

Office européen des brevets

(11) **EP 1 645 941 A2**

(12) **EUROPEAN PATENT APPLICATION**

(43) Date of publication:
**12.04.2006 Bulletin 2006/15**

(51) Int Cl.:
***G06F 1/32*** *(2006.01)* ***H02M 3/10*** *(2006.01)*

(21) Application number: **05100729.2**

(22) Date of filing: **02.02.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (71) Applicant: **MITSUBISHI HEAVY INDUSTRIES, LTD.**<br>**Tokyo 108-8215 (JP)** |
| (30) Priority: **08.10.2004 JP 2004296906** | (72) Inventor: **Kawabata, Osamu**<br>**108-8215, Tokyo (JP)**<br><br>(74) Representative: **Henkel, Feiler & Hänzel**<br>**Möhlstrasse 37**<br>**81675 München (DE)** |

(54) **Information processing electronic device**

(57)     Provided is an information processing electronic device by which even if a CPU and/or information processing integrated circuit enters a sleep mode in a frequency of 100 to 10,000 times per second, a leakage current loss caused in the CPU or integrated circuit in a transition time of rise and fall of a supply voltage is reduced, a loss reduction effect in such highly frequent sleep function is maximized and a smaller and lighter device is realized. While at least one of the CPU and information processing integrated circuit is frequently applied with a sleep control, a DC/DC converter which includes at least one SiGe bipolar transistor for switching operation, supplying the CPU and/or information processing integrated circuit with the power has a capacity to put out a power of 20 to 50W as well as has at least one inductor of the DC/DC converter, the at least one inductor being so constructed that an equivalent inductance value thereof is 0.04 to 0.75 μH; when the DC/DC converter has a capacity to put out a power of 20W, the at least one inductor is so constructed that the equivalent inductance value thereof is 0.15 to 0.75 μH; and when the DC/DC converter has a capacity to put out a power of 50W, the at least one inductor is so constructed that the equivalent inductance value thereof is 0.04 to 0.2 μH.

**EP 1 645 941 A2**

**Description**

BACKGROUND OF THE INVENTION

Field of the Invention

The present invention relates to an information processing electronic device used as various mobile devices, such as a personal computer (PC), a mobile phone, a personal digital assistance (PDA), etc., as well as used as a digital television, a digital camera, etc. in which energy saving is currently demanded. By using a DC/DC converter having a high switching frequency of several tens MHz, a rise and a fall of voltage supplied into a CPU (central processing unit) or information processing integrated circuit are effected within a time of 100 nsec or less. Thereby, even if the CPU or integrated circuit is frequently applied with a sleep mode in a rate of 100 to 10,000 times per second, a leakage current loss caused in the CPU or integrated circuit in a transition time of the rise and fall of the supply voltage is reduced and a loss reduction effect in a sleep operation of such high frequency is maximized and, at the same, size and weight of the device are greatly reduced.

Description of the Related Art

Recently, for preventing the global warming, reduction of a carbon dioxide-converted power consumption is currently demanded world-wide. For example, in a switching type power supply of an air conditioner or electric vehicle, for the purpose of saving energy or making effective use of a battery charged power, to suppress an electric power loss and enhance an energy availability is considered important. Also, in a motor drive power supply circuit, to suppress the electric power loss leads to a possibility to make a cooling radiation fin smaller and thereby to obtain an advantage to make the device smaller and less expensive. Moreover, in various mobile devices of a mobile phone, etc., such a DC/DC converter as is able to realize a high energy efficiency by suppressing the loss as well to realize a small size and a light weight is being desired.

Also, in various information processing electronic devices, such as a PC, a mobile phone, a PDA, a local area network (LAN) device, a liquid crystal television, a digital camera, a game device, etc., to provide them with an energy saving function is a large object of the development. In these information processing electronic devices, the commercial power source is first converted into a direct current of low voltage by an AC adapter to thereby charge a built-in battery with power as well as to be further converted into various DC voltages (DC/DC conversion) appropriate for various built-in electronic circuits or devices so that the power is consumed by respective circuits or components of each of the devices.

Moreover, in the mobile phone, mobile type PC, digital camera, etc. in which a battery is mainly used for a mobile use, in addition to making the size smaller and the weight lighter, to make a battery operation time longer is being desired. Thus, in the mobile type information processing electronic device, such as the mobile phone, digital camera, mobile type PC, PDA, etc., to compact as many functions as possible in a limited volume is becoming important as one of the points for realizing salable products.

On the other hand, while a high speed CPU is recently realized by a low voltage drive method, there is caused a new problem that a loss is increased by a leakage current caused in a transistor structure needed for the low voltage drive. As a countermeasure therefor, while a large size cooling fan is used, it has a sound problem. Hence, in place of such cooling fan, even a water cooled type information processing unit is being realized.

As one of the countermeasures therefor, recently, in a mobile type light weight PC, such a processing unit is being widely employed as has an operating system (OS) function in which, for reducing the internal loss, operation time periods are finely combined by adjusting the CPU arithmetic processing speed or ceasing the CPU arithmetic processing operation corresponding to the needed arithmetic processing load state (Such cease of operation is a function to turn off a huge number of associated transistors in the CPU and is often referred to as a sleep function or sleep made.). That is, in the CPU, while a low voltage drive (in other words, a low withstand voltage) is being developed for realizing a high speed and reducing necessary power for maximum operation, as the result thereof, a large loss is caused due to the OFF time leakage current of the huge number of the CPU internal transistors even in the state of cease of the operation. The loss in this case becomes very large because it is a time quadrature of the leakage current and the CPU voltage at that time.

It is to be noted that the term "sleep function" or "sleep mode" as used in the present invention is understood to include the following states:

1) The state that the CPU and LSI are not in operation and the voltage applied thereto is made sufficiently low (that is, the leakage current loss is small).
2) The state that the CPU and LSI are kept in a voltage/frequency of their minimum availability.
3) The state that the CPU and LSI are kept in a voltage/frequency of an availability that is lower than their maximum availability and is necessary and sufficient, but not excessive, for the arithmetic processing.

For example, in a technical document of Pentium (registered trademark) M (Non-Patent Document 1 shown below), it is mentioned that the leakage current is 6A at the CPU voltage of 1.05V that performs the minimum arithmetic processing operation and that if this state continues constant, the CPU internal loss becomes as large as 6.3W being caused only by the leakage current. As CPUs actually employing such sleep function, there are Pentium (registered trademark) M made by the company Intel, Crusoe made by the Company Trans Meta, etc. (Non-Patent Document 2). In these CPUs, in order to efficiently realize the loss reduction in the CPU by using the sleep function, it is recommended that the sleep state is frequently repeated in such a frequency as about 1,000 times/ second. Moreover, in such sleep state, it is becoming important to control the power supply from an electric source in a high speed corresponding to a load of the CPU or the like. Also, in the Pentium (registered trademark) M, it is recommended that the CPU supply voltage can return to a predetermined voltage and current within a time of 100 nsec or less from the time when the OS gives a command for the CPU to return to the maximum arithmetic processing operation from the sleep state. (For example, 855 Chipset Platform of the Company Intel)

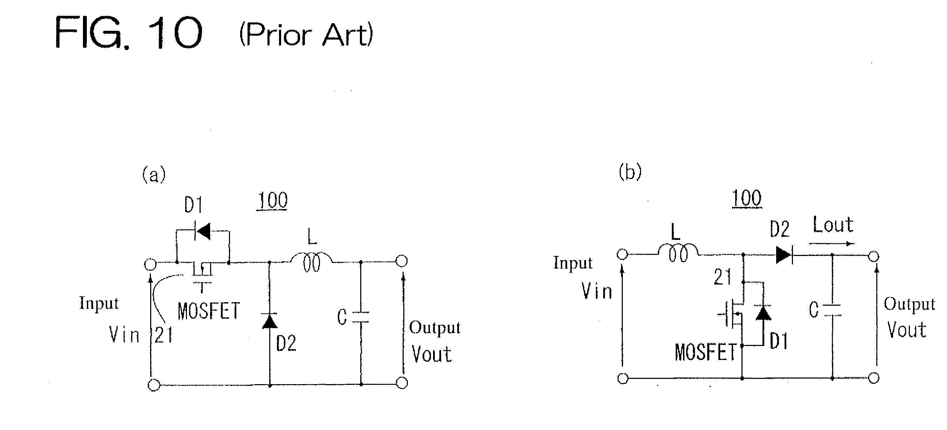

In relation to the present invention, as a conventional art of a DC electric source or DC/DC converter converting a power to an optimal voltage to be supplied to a load of CPU or the like, a step-down type DC/DC converter and a step-up type DC/DC converter are shown in Fig. 10(a) and Fig. 10(b), respectively. Such converters are also mentioned in Table 10-4 of page 112 of "Practical Power Electronics Primer" of Transistor Technology Special Edition, August, 1988, CQ Publishing Co. The step-down type DC/DC converter puts out an arbitrary voltage that is lower than the input voltage and the step-up type DC/DC converter puts out an arbitrary voltage that is higher than the input voltage. Hereinafter, as the effect obtained by the present invention is common to each case, the description will be made on the example of the step-down type DC/DC converter.

In an information processing terminal device, such as a PC, a mobile phone, etc., the DC/DC converter is used as a power supply electric source in which an input of an output DC voltage of an AC adapter, battery or the like is stepped up or stepped down to a voltage appropriate for the load of CPU, display, information communication circuit or the like. For example, in a mobile type PC, an AC input of commercial frequency, such as of fifty(50) or sixty(60) [Hz], is converted into a DC voltage of DC 10 to 15V by the AC adapter, which at the same time is used for charging the battery contained in the PC. In the PC, a plurality of DC/DC converters are used so that the power is supplied being converted into various voltages appropriate for respective loads, as mentioned above.

In a conventional DC/DC converter circuit 100 as shown in Fig. 10(a), when an input DC voltage Vin is applied, an output voltage Vout is put out from both terminals of a smoothing condenser C by ON/OFF actions of a field effect transistor (FET) 21. Here, if the FET 21 is turned on, the current streams in the smoothing condenser (or named capacitor) C via the FET 21 of the ON state as well as via an inductor L to be accumulated in the smoothing condenser C. Then, if the FET 21 is turned off, the energy accumulated in the inductor L is charged further in the smoothing condenser C through a second diode D2. In this way, by performing the ON/OFF actions of the FET 21 as a switching element on a predetermined duty, the input DC voltage Vin is stepped down to be converted into a predetermined output voltage Vout. The smoothing condenser C and inductor L are used for smoothing a ripple of the DC output voltage. As this ripple becomes large if a switching frequency of the FET 21 is small, a large smoothing condenser and inductor become necessary in order to suppress the ripple to a predetermined level.

Thus, in case where the CPU enters the above-mentioned sleep state from a predetermined arithmetic load state by a command of the OS, if the switching frequency of the FET 21 of the DC/DC converter is low and a capacitance of the smoothing condenser C is large, even if the FET 21 is turned off by a command of a control circuit of the DC / DC converter, the energy accumulated in the smoothing condenser C having a large capacitance will become to be source of the leakage current loss, as mentioned above, in the CPU or information processing integrated circuit. Also, in case where the CPU returns to the predetermined arithmetic load state from the sleep state, even if the FET 21 is turned on, a long time is required for the condenser having the large capacitance to be charged with a high voltage value necessary for the predetermined arithmetic load state through the inductor having a large inductance value. The energy in this long time likewise becomes the leakage current loss in the CPU or information processing integrated circuit and this results in an increase of heat generation, an elevation of temperature and a reduction of battery discharge time in the CPU. If the sleep function is used frequently, for example, about 1,000 to 10,000 times/sec. or at least 100 times/sec. or more, the internal loss of the CPU or the like increases in proportion to the number of times. Hence, if the sleep function of the CPU is to be used so frequently, such a DC/DC converter as enables a control of the high speed output voltage becomes indispensable in order that a transition time to enter the sleep mode or to return from the sleep mode is shortened and the internal loss of the CPU or the like is reduced.

Nevertheless, in the conventional art, it is difficult to perform such a high speed output control of the power. For, if an efficiency, size and cost of the device are considered, a conventional switching frequency that is realizable by a FET element performing the switching operation in the DC/DC converter is at most 1 MHz and the conventional DC/DC converter cannot help using a large inductor and condenser for the output.

As a conventional art enabling a high speed control of the above-mentioned supply voltage in case where the OS gives an ON or OFF command of the sleep function, there is proposed, for example, a means providing a switch circuit using a high speed semi-conductor element between a DC/DC converter and a CPU or information processing integrated circuit, as shown in Fig. 3 of the below-mentioned Patent Document 3. According to this conventional art, a high speed control of the supply voltage is possible and the leakage current loss in a CPU or the like during the transition time can be largely reduced.

Nevertheless, in a usual arithmetic processing action other than the sleep mode, there is a large problem that a loss is caused by the ON voltage or ON resistance of the semi-conductor element, which may give a reverse effect in the total loss reduction.

Non-Patent Document 1: "Intel Pentium (Registered Trademark) M Processor Data Sheet", June, 2003
Non-Patent Document 2: "Long Run Power Management, Dynamic Power Management Technology for Supporting Crusoe Processors", January 17, 2001
Non-Patent Document 3: "Practical Power Source Circuit Design Handbook" Hardware Design Series, page 76, CQ Publishing Co.
Non-Patent Document 4: "Simple Design of Transistor Circuits", March, 1977, pages 318 to 324, CQ Publishing Co.
Patent Document 1: JP Laid-open Application 2001-338928
Patent Document 2: JP Laid-open Application 2002-299602
Patent Document 3: WO 01/55823 A2 "Apparatus for providing regulated power to an integrated circuit"

SUMMARY OF THE INVENTION

With respect to these information processing electronic devices, in order to respond to the need of smaller size and lighter weight devices, various technological development efforts are being carried out. As one of such development efforts, also with respect to CPUs or various LSIs themselves, a loss reduction by means of a low voltage drive is being proceeded. Also, an elongation of a battery operation time by means of the loss reduction is likewise being proceeded. Thus, with respect to individual circuits, LSIs and other components contained in the devices, to make them smaller in size and lighter in weight as well as to reduce the loss in the devices are being desired.

It is therefore an object of the present invention to provide an information processing electronic device in which, even if a CPU or information processing integrated circuit contained in the information processing electronic device frequently enters a sleep mode in a rate of about 1.00 to 10,000 times per second, a leakage current loss caused in the CPU or integrated circuit in a transition time of rise and fall of the supply voltage is made smaller so as to maximize a loss reduction effect in such frequent sleep function to thereby realize at the same time a smaller size and a lighter weight of the device.

In the conventional DC/DC converter, as a switching frequency thereof is low, the inductor/condenser for smoothing and reducing the ripple component included in the output voltage are of a large type and this becomes an obstacle in performing the low loss advantage at the highly frequent sleep function. In this way, even if the OS recommends to frequently perform the sleep state in a rate of about 1,000 times per second, there has been actually provided no such a product as correspondingly realizes a small size and a light weight of the device as well as a loss reduction thereof.

In view of the above-mentioned circumstances, the present invention provides an information processing electronic device in which, by using a novel DC/DC converter that enables a high speed output control, even if the sleep operation is frequently performed in a rate of about 100 to 10,000 times per second as recommended by the OS, the loss reduction function is efficiently achieved.

The information processing electronic device of the present invention comprises a CPU, an information processing integrated circuit, an information input means, an information display unit and an information recording medium (memory) as well as at least one DC/DC converter supplying these components with a power and is characterized in that while at least one of the CPU and information processing integrated circuit is frequently applied with a sleep control in a frequency of about 100 to 10,000 times per second, the DC/DC converter supplying the CPU and/or information processing integrated circuit with the power has a capacity to put out a power of 20 to 50 W as well as has at least one inductor of the DC/DC converter, the at least one inductor being so constructed that an equivalent inductance value thereof is 0.04 to 0.15 $\mu$H; when the DC/DC converter has a capacity to put out a power of 20 W, the at least one inductor is so constructed that the equivalent inductance value thereof is 0.15 to 0.75 $\mu$H; and when the DC/DC converter has a capacity to put out a power of 50 W, the at least one inductor is so constructed that the equivalent inductance value thereof is 0.04 to 0.2 $\mu$H.

Also, the information processing electronic device of the present invention comprises a CPU and/or an information processing integrated circuit as well as a DC/DC converter supplying these components with a power and is characterized in that the DC/DC converter has at least one inductor connected to the DC/DC converter; when the DC/DC converter is constructed so as to have a capacity to put out a small power of 0.5 to 5 W, the at least one inductor is so constructed that an equivalent inductance value thereof has its lower limit value elevated so as to be 0.1 to 2.0 $\mu$H; when the DC/DC converter has a capacity to put out a power of 0.5 W, the at least one inductor is so constructed that the equivalent inductance value thereof is 2.0 to 10.0 $\mu$H; and when the DC/DC converter has a capacity to put out a power of 5 W, the at least one inductor is so constructed that the equivalent inductance value thereof is 0.1 to 0.5 $\mu$H.

Moreover, any one of the above-mentioned information processing electronic devices of the present invention is characterized in that the DC/DC converter and a load to which the DC/DC converter supplies the power are connected to each other with no switching element nor switching circuit being interposed therebetween.

In the conventional art, as the inductor/condenser of the DC / DC converter have a large specification value, the energy loss caused in the transition time during which the sleep state is turned on or turned off is large. In order to solve this problem, a means to make the specification value of the inductor/ condenser of the DC/DC converter smaller is effective.

The inventor here has heretofore made an invention of a DC/DC converter needed for realizing a novel, small sized and highly efficient device of the present invention and filed a patent application therefor as the Japanese patent application 2003-191551. This DC/DC converter is generally called a DC power source. In order to make the DC/DC converter smaller in size, lighter in weight and more efficient in performance, a transistor of which speed is higher by more than ten times than the conventional one and in which ON-time voltage is small is necessary. This is common to the technological concept of the present invention. For this purpose, it is most effective that a switching speed of the power transistor is made higher and a collector-emitter voltage at the ON-time is made lower thereby to make the smoothing condenser and the inductor smaller and lighter and at the same time reduce the internal loss of the switching transistor. Nevertheless, in the conventional field effect transistor and IGBT, the switching frequency of about 1 MHz is the maximum.

On the other hand, a SiGe (silicon germanium) transistor is used as a radio amplifier of 1 GHz or so for a mobile phone. While this is of a high speed, there is a problem that the withstand voltage is low, the current amplification factor is low, etc. This is for the reason that in the radio amplifier, the internal noise must be made extraordinarily small and this makes the amplification factor low. Also, the technologist in the SiGe transistor field has heretofore mainly put eyes on reducing the internal noise and not at all has been put on the study and development of the SiGe transistor for use in the DC/DC converter.

The inventor here, based on the extensive concrete application developments, has obtained a new concept to elevate the amplification factor even at the sacrifice of the internal noise, which has been quite unable to be derived from an ordinary viewpoint of the common sense. That is, the developments have been proceeded putting eyes on the concept that by using the SiGe transistor having a high switching characteristic, a DC/DC converter appropriate for supplying a CPU or information processing integrated circuit of the information processing electronic device with a power could be obtained. This is not a mere discovery of an incidental application example.

For realization thereof, an invention has been made, as a basis of the present invention, on a DC/DC converter constructed such that a switching frequency of the DC/DC converter is increased to several tens times from 1 MHz as the maximum of the conventional case to thereby make the inductor and the smoothing condenser smaller and at the same time reduce the loss of the switching transistor.

In other words, the inventor here has put eyes on the SiGe transistor having a high speed switching characteristic and executed extensive studies on the possibility that the SiGe transistor of which application to a switching element of the DC/DC converter, etc. has so far been by no means considered is used for a DC/DC converter of an information processing electronic device used as various mobile devices, such as a PC, a mobile phone, a PDA, etc. as well as used as a digital television, a digital camera, etc. This has resulted in a completion of the DC/DC converter, as will be described below, which led to the present invention.

Details of the DC/DC converter of what is generally called a step-down type used in the present invention are as follows;

In a DC/DC converter comprising a transistor having its collector terminal connected to one converter input terminal, an inductor having its one terminal connected to an emitter terminal of the transistor, a smoothing condenser having its one terminal connected to the other terminal of the inductor and one converter output terminal, a diode having its cathode terminal connected to the emitter terminal of the transistor and a common terminal commonly connected with an anode terminal of the diode, the other terminal of the smoothing condenser, the other converter input terminal and the other converter output terminal, the transistor is a bipolar transistor having its base layer formed to include Ge (germanium) of a predetermined concentration distribution.

Also, in another DC/DC converter comprising a transistor having its collector terminal connected to one converter input terminal, an inductor having its one terminal connected to an emitter terminal of the transistor, a smoothing condenser having its one terminal connected to the other terminal of the inductor and one converter output terminal, a first diode having its cathode terminal connected to the emitter terminal of the transistor, a common terminal commonly connected with an anode terminal of the first diode, the other terminal of the smoothing condenser, the other converter input terminal and the other converter output terminal and a second diode having its cathode terminal connected to the collector terminal of the transistor and its anode terminal connected to the emitter terminal of the transistor, the transistor is a bipolar transistor having its base layer formed to include Ge (germanium) of a predetermined concentration distribution.

In any one of the above-mentioned DC/DC converters, a base layer of the transistor may have a Si (Silicon) layer on the emitter side of the transistor and a SiGe layer, in which Ge concentration is 6 to 16%, on the collector side of the transistor. Further, the base layer of the transistor has a thickness of 60 to 90 nm and the collector layer of the transistor has a thickness of 1.5 to 2.5 $\mu$m.

Also, the base layer of the transistor may have a first SiGe layer on the emitter side of the transistor and a second SiGe layer, in which the Ge concentration is larger than that of the first SiGe layer, on the collector side of the transistor. The Ge concentration of the second SiGe layer is 6 to 16%. The base layer of the transistor has a thickness of 60 to 90 nm and the collector layer of the transistor has a thickness of 1.5 to 2.5 $\mu$m.

In the base layer of the transistor, preferably, the Ge concentration gradually increases toward the collector layer side from the emitter layer side and its peak value is 6 to 16%.

Moreover, in any one of the above-mentioned DC/DC converters, a field effect transistor may be connected in parallel with the diode(s). Also, an electric supply module comprising a plurality of the above-mentioned DC/DC converters, an external input terminal and an external output terminal may be provided.

Next, details of the DC/DC converter of what is generally called a step-up type used in the present invention are as follows;

In a DC/DC converter comprising an inductor having its one terminal connected to one converter input terminal, a transistor having its collector terminal connected to the other terminal of the inductor, a diode having its anode terminal connected to the collector terminal of the transistor, a smoothing condenser having its one terminal connected to a cathode terminal of the diode and one converter output terminal and a common terminal commonly connected with the other converter input terminal, an emitter terminal of the transistor, the other terminal of the smoothing condenser and the other converter output terminal, the transistor is a bipolar transistor having its base layer formed to include Ge (germanium) of a predetermined concentration distribution.

Also, in another DC/DC converter comprising an inductor having its one terminal connected to one converter input terminal, a transistor having its collector terminal connected to the other terminal of the inductor, a first diode having its anode terminal connected to the collector terminal of the transistor, a smoothing condenser having its one terminal connected to a cathode terminal of the first diode and one converter output terminal, a second diode having its cathode terminal connected to the collector terminal of the transistor and its anode terminal connected to the emitter terminal of the transistor and a common terminal commonly connected with the other converter input terminal, the emitter terminal of the transistor, the other terminal of the smoothing condenser and the other converter output terminal, the transistor is a bipolar transistor having its base layer formed to include Ge (germanium) of a predetermined concentration distribution.

In any one of the above-mentioned DC/DC converters, a base layer of the transistor may have a Si (Silicon) layer on the emitter side of the transistor and a SiGe layer, in which Ge concentration is 6 to 16%, on the collector side of the transistor. Further, the base layer of the transistor has a thickness of 60 to 90 nm and the collector layer of the transistor has a thickness of 1.5 to 2.5 $\mu$m.

Also, the base layer of the transistor may have a first SiGe layer on the emitter side of the transistor and a second SiGe layer, in which the Ge concentration is larger than that of the first SiGe layer, on the collector side of the transistor. The Ge concentration of the second SiGe layer is 6 to 16%. The base layer of the transistor has a thickness of 60 to 90 nm and the collector layer of the transistor has a thickness of 1.5 to 2.5 $\mu$m.

In the base layer of the transistor, preferably, the Ge concentration gradually increases toward the collector layer side from the emitter layer side and its peak value is 6 to 16%.

Moreover, in any one of the above-mentioned DC/DC converters, a field effect transistor may be connected in parallel with the diode(s). Also, an electric supply module comprising a plurality of the above-mentioned DC/DC converters, an external input terminal and an external output terminal may be provided.

By the above-mentioned construction, a DC/DC converter comprising a transistor having a high switching frequency and a high amplitude factor is provided and the present invention can be achieved.

BRIEF DESCRIPTION OF THE DRAWINGS

Fig. 1 is a schematic view showing the state that an embodiment of the present invention is applied to a PC unit.

Fig. 2 is a circuit diagram of a DC/DC converter of the embodiment of the present invention being applied to the PC, in which Fig. 2(a) is of an embodiment having two DC/DC converters and Fig. 2(b) is of an embodiment having four DC/DC converters.

Fig. 3 is a circuit diagram of the DC/DC converter of the embodiment of the present invention, in which Fig. 3(a) is of a step-down type DC/DC converter, Fig. 3(b) is of a step-up type DC/DC converter, Fig. 3(c) is of a DC/DC converter having a protective diode and Fig. 3(d) is of another DC/DC converter having protective diodes.

Fig. 4 is a schematic cross sectional view showing one example of a structure of a SiGe/Si heterojunction type bipolar transistor.

Fig. 5 is a view schematically showing an impurity concentration distribution curve of one example of a structure in which a Ge concentration distribution of the SiGe bipolar transistor has a trapezoidal shape.

Fig. 6 is a view schematically showing an impurity concentration distribution curve of one example of a structure in which the distribution includes a slope portion.

Fig. 7 is a view showing a Ge concentration and a current amplification factor of the SiGe bipolar transistor at ON-stage saturated to Vce≦0.10 [V].

Fig. 8 is a schematic cross sectional view showing one example of a lateral type structure (planar structure) of the SiGe bipolar transistor.

Fig. 9 is a timing chart showing a circuit switching characteristic, in which Fig. 9(a) is of a conventional case as a comparison example and Fig. 9(b) is of a case to which the embodiment of the present invention is applied.

Fig. 10 is a circuit diagram of a conventional DC/DC converter of a field effect transistor type, in which Fig. 10(a) is of a step-down type DC/DC converter and Fig. 10(b) is of a step-up type DC/DC converter.

DESCRIPTION OF THE PREFERRED EMBODIMENTS

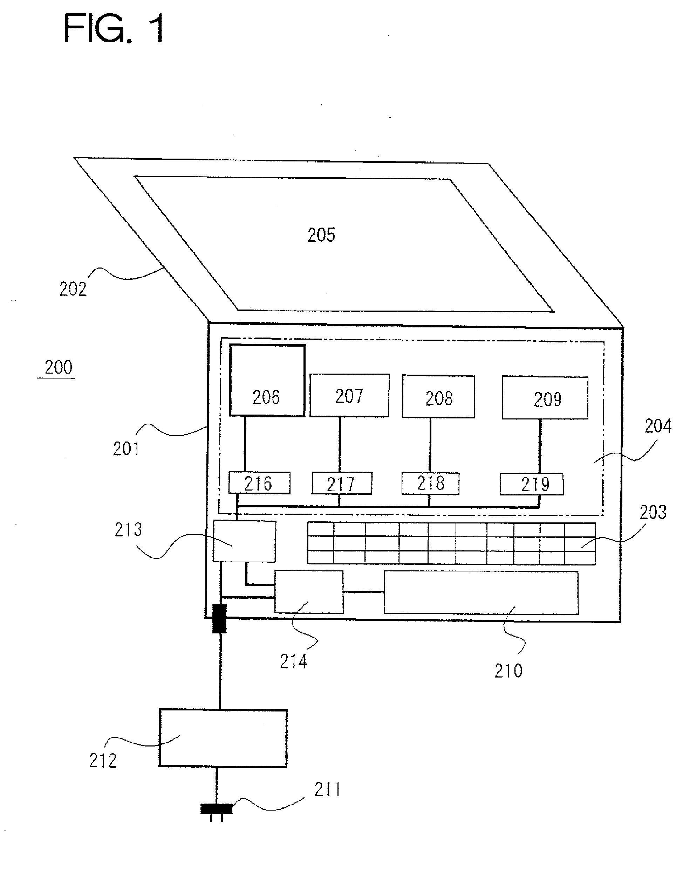

As a most general one of an information processing electronic device realizing the present invention, an embodiment used in a PC unit will be described. This PC unit realizing the present invention is constructed as shown in Fig. 1. That is, a PC body 200 comprises an information processing main portion 201 having a keyboard 203 and a main board (mother board) 204 and a display portion 202 having a screen portion 205. In the main board 204, a first load 206, a second load 207, a third load 208 and a fourth load 209 are installed as main information processing associated units. Here, in the present embodiment, the first load 206 is a CPU effecting a sleep function of the present invention and the second load 207, third load 208 and fourth load 209 are first, second and third system LSIs, respectively.

Electric supply to these first to fourth loads 206 to 209 is done from a battery 210 when the PC is not connected to an AC electric source. If a consent 211 is connected to an AC electric source (100 to 240V), electric supply to each of the loads is done from the AC electric source via an AC adapter (AC / DC converter). Electric source supplied via the AC adapter (DC 10 to 20V) is supplied to each of the loads further via a power switch 213 and DC/DC converters 216 to 219 (DC 1.05 to 2.1V). Also, at this time the battery 210 is charged by the AC electric source via a battery charger 214.

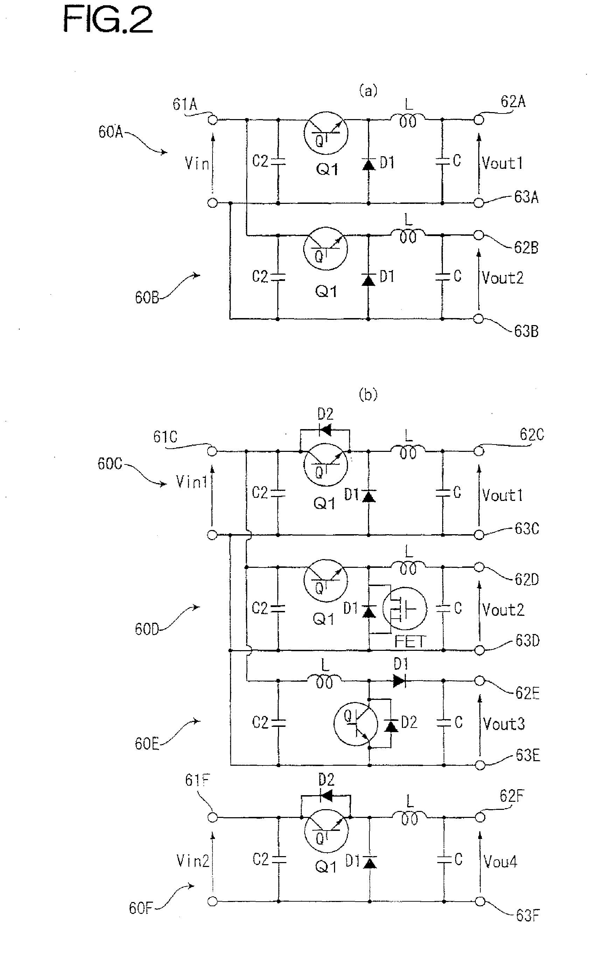

The above-mentioned DC/DC converters are constructed as a DC electric supply module. In Fig. 2(a), an example of the DC electric supply module is shown in which one Vin is inputted and two Vout 1 and Vout 2 are put out. The DC electric supply module shown in Fig. 2(a) comprises step-down type DC/DC converters 60A, 60B, an input terminal 61A and earth terminals 63A, 63B. The DC/DC converters 60A, 60B comprise output terminals 62A, 62B, respectively, that are used as output terminals of the DC/DC electric supply module. Further, the respective DC/DC converters 60A, 60B comprise condenser C2 that are connected between the input terminal and the earth terminals. Input terminals of the respective DC/DC converters 60A, 60B are connected to the input terminal 61A. Earth terminals of the respective DC/DC converters 60A, 60B are connected to the earth terminal 63A. Each of the DC/DC converters 60A, 60B functions as an independent DC/DC converter. That is, the respective DC/DC converters 60A, 60B are supplied with the input voltage Vin from the input terminal 61A and put out the output voltages Vout 1, Vout 2 from the respective output terminals 62A, 62B.

The DC electric supply module may comprise a plurality of input terminals. An example of such DC electric supply module is shown in Fig. 2(b). This DC electric supply module comprises four DC/DC converters 60C, 60D, 60E, 60F, two input terminals 61C, 61F and two earth terminals 63C, 63F. Output terminals 62C to 62F of the DC/DC converters 60C to 60F are used as output terminals of the DC electric supply module. The respective DC/DC converters 60C to 60F comprise condenser C2 connected between the input terminals and the earth terminals. Input terminals of the respective DC/DC converters may be connected to one of the input terminals 61C, 61F and earth terminals of the respective DC/DC converters are connected to one of the earth terminals 63C, 63F corresponding to the input terminals 61C, 61F. In Fig. 2(b), the input terminals of the DC/DC converters 60C to 60E are connected to the input terminal 61C and the input terminal of the DC/DC converter 60F is connected to the input terminal 61F. The earth terminals of the DC/DC converters 60C to 60E are connected to the earth terminal 63C and the earth terminal of the DC/DC converter 60F is connected to the earth terminal 63F. Each of the DC/DC converters functions as an independent DC/DC converter.

That is, the respective DC/DC converters 60C to 60D are supplied with an input voltage Vin 1 from the input terminal 61C and put out output voltages Vout 1 to 3 from the respective output terminals 62C to 62E. The DC/DC converter 60F is supplied with an input voltage Vin 2 from the input terminal 61F and puts out an output voltage Vout 4 from the output terminal 62F.

With respect to electrical characteristic values of the condensers C2 of the respective DC/DC converters shown in Figs. 2(a) and (b), there are cases where they are all the same or some of them are the same and the remains are different from each other or they are all different from each other. The same applies to the condensers C and also to the inductors L. In Fig. 2(a), while both of the DC/DC converters 60A, 60B are inputted with the common input voltage Vin, there are cases where the output voltages Vout 1 and Vout 2 are different from each other or they are the same. The earth terminals 63A, 63B are common to each other. In Fig. 2(b), while the DC/DC converters 60C to 60E are inputted with the common input voltage Vin 1, there are cases where voltage values of the output voltages Vout 1 to 3 are all different from each other or they are all the same or some of them are the same and the remains are different from each other. The earth terminals 63C to 63E are common to each other. There are cases where the input voltage Vin 2 of the DC/DC converter 60F is the same as, or different from, the input voltage Vin 1. There are cases where the earth terminal 63F is common to, or different from, the earth terminal 63C. As shown in Figs. 2(a) and (b), while there are also cases where a plurality of step-up type DC/DC converters or step-down type DC/DG converters are provided, it is also easy that the step-up type and the step-down type are connected in series to each other so as to construct a step-up and step-down type DC/DC converter to thereby enlarge the range of the output voltage. In the present invention, all the DC/DC converters are integrated as the above-mentioned DC electric supply module. By such integrated DC electric supply module, reduction of the volume and reduction of the power consumption can be realized.

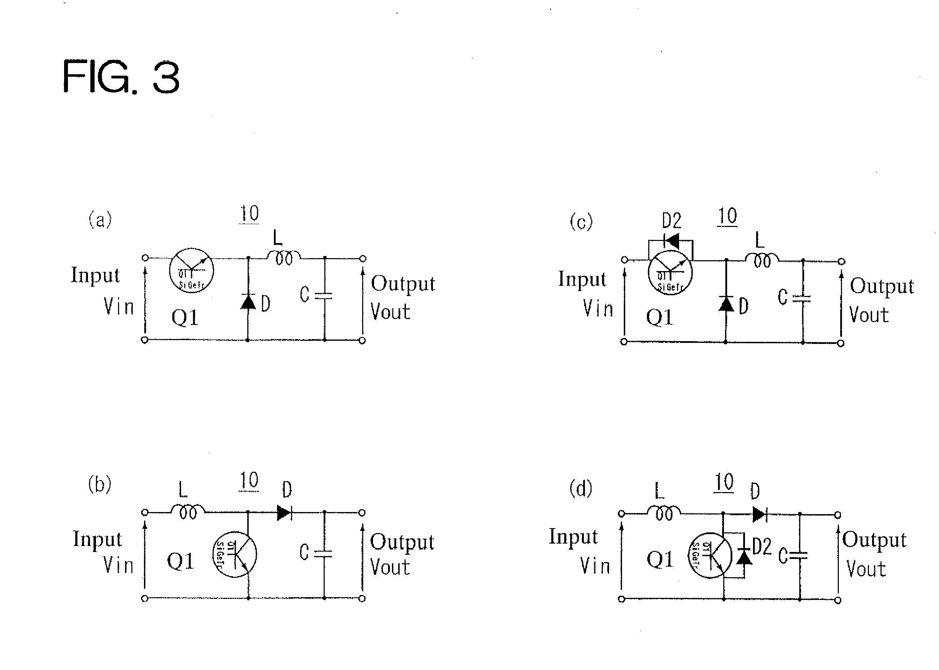

Next, actual application examples of the DC/DC converter which is comprised in the present invention will be described with reference to Figs. 3 to 9.

(First Actual Example)

A first actual example in which the DC/DC converter of the present invention is applied to a PC unit will be described with reference to Figs. 3(a) to (d). A DC/DC converter 10 shown in Fig. 3(a) is a step-down type DC/DC converter converting an input voltage Vin into an output voltage Vout. A voltage converting circuit of this DC/DC converter 10 comprises a SiGe transistor Q1, a diode D, an inductor L and a smoothing condenser C. The inductor L is connected between an emitter terminal of the SiGe transistor Q 1 and the smoothing condenser C on the output side.

Also, as shown in Fig. 3(c), a second diode D2 may be provided in parallel with the SiGe transistor Q 1 and this second diode D2 functions as a protective element that prevents the SiGe transistor Q1 from being damaged when the output voltage becomes excessive.

One example of the performance of the SiGe transistor Q 1 used in the present actual example is enumerated below:

| | | |
|---|---|---|
| 1) | Rated current : | 1.0A |
| 2) | Rated collector-emitter breakdown voltage : | 50V |
| 3) | ON state collector-emitter voltage (Junction portion temperature=100°C) : (As the current is 1A, an ON resistance-converted value is 100mΩ.) | 0.10V |
| 4) | Turn-on time (ditto) : | 0.5 nsec. |
| 5) | Turn-off time (ditto) : | 0.5 nsec |
| 6) | Current amplification factor (hfe) (ditto) : | 500 or more |

The above performance is of the case where the SiGe transistor Q1 has a device area of 0.36 mm$^2$.

In the state that the transistor Q 1 as a switching element is turned on, the input voltage Vin is applied to a series circuit of the inductor L and the smoothing condenser C. In the state that the transistor Q1 is turned off, the energy accumulated in the inductor L is charged as a current into the smoothing condenser C via the diode D. The smoothing condenser C smoothes the DC voltage to be put out as the output voltage Vout. By controlling the ratio of ON time and OFF time of the transistor Q1, a predetermined output voltage Vout obtained by stepping down the input voltage Vin is put out as the output voltage.

The DC/DC converter used in the present actual example has been realized by developing a transistor of a high speed and a small ON time collector-emitter voltage of which SiGe base layer has a structure as described below.

At the initial stage of the development of this transistor, a SiGe/Si heterojunction bipolar transistor (herein simply referred to as a SiGe transistor) as disclosed in the Japanese laid-open patent applications 2002-338928 and 2002-299602 of the same applicant here has been used. As a basic structure of this transistor, a low concentration N type Si collector layer, a P type SiGe base layer and an N type Si emitter layer are sequentially laminated on a high concentration N type Si substrate. On this basis, extensive studies and developments have been performed as to a Ge concentration or a Ge concentration distribution in this SiGe base layer as well as a base layer thickness or collector thickness and by setting them to respective predetermined ranges, a switch element having a low ON voltage and a high amplification factor as well as enabling a high speed switching operation has been obtained, which led to the completion of the present invention.

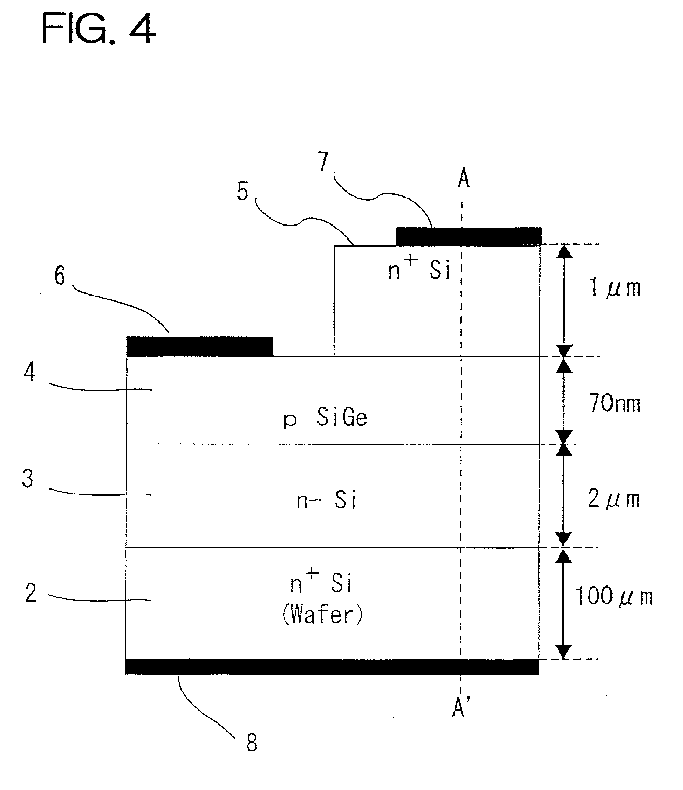

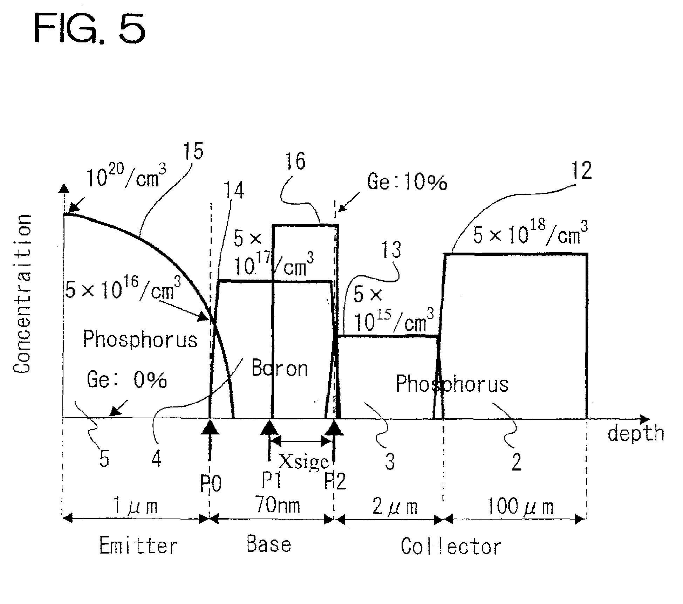

The above-mentioned transistor will be described with reference to a structural view of Fig. 4 and an impurity concentration distribution of Fig. 5. The impurity concentration distribution of Fig. 5 shows an impurity concentration distribution of A-A' partion of Fig. 4. In this transistor, on a high concentration N type silicon substrate (wafer) 2, there are formed a collector layer 3 having a low concentration N type silicon layer, a base layer 4 having a P type silicon germanium layer containing a Ge concentration distribution and an emitter layer 5 having a high concentration N type silicon layer or N type amorphous silicon.

An N type impurity of the high concentration N type silicon substrate 2 is P (phosphorous) or As (arsenic) and an impurity concentration thereof is $5 \times 10^{18}/cm^3$ and a thickness thereof is 100 $\mu$m (micrometer). But this N type impurity may also be constructed such that the N type impurity concentration is in the range of $1 \times 10^{18}$ to $1 \times 10^{20}/cm^3$ and the thickness is in the range of 100 to 500 $\mu$m.

An N type impurity of the collector layer 3 is P or As and an impurity concentration thereof is $5 \times 10^{15}/cm^3$ and a thickness of the collector layer 3 is 2 $\mu$m. But this N type impurity may also be constructed such that the N type impurity concentration is in the range of $5 \times 10^{14}$ to $1 \times 10^{16}/cm^3$ and the thickness is in the rage of 1.5 to 2.5 $\mu$m.

A P type impurity of the base layer 4 is B (boron) and an impurity concentration thereof is $5 \times 10^{17}/cm^3$ and a thickness of the base layer 4 is 70 nm (nanometer). But this P type impurity may also be constructed such that the P type impurity concentration is in the range of $3 \times 10^{17}$ to $8 \times 10^{17}/cm^3$ and the thickness is in the range of 60 to 90 nm. If the thickness is less than 60 nm, the withstand voltage will be lowered and if the thickness is more than 90 nm, the hfe will be lowered.

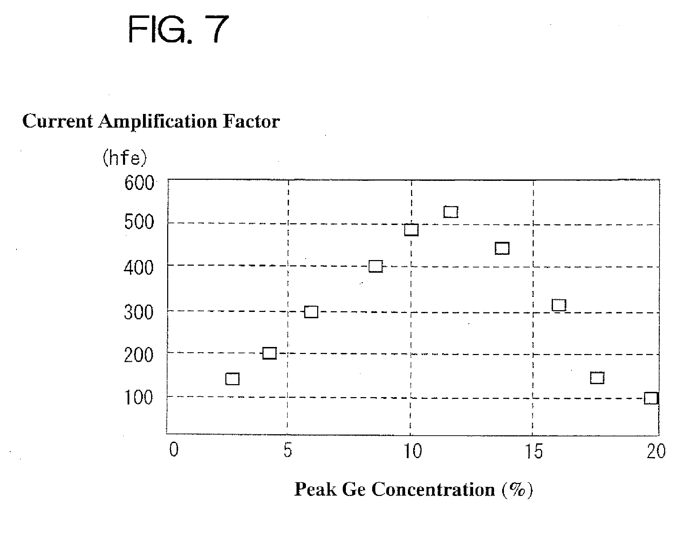

As shown in Fig. 5, a Ge concentration distribution 16 of the base layer 4 is constructed in a trapezoidal shape in which the concentration is 0% from a boundary PO between the emitter layer 5 and the base layer 4 to position P 1 in the base layer 4 and 10% from the position P1 to a boundary P2 between the collector layer 3 and the base layer 4. Supposing that the thickness of the entire base layer 4 is 70 nm, a distance Xsige from P1 to P2 is constructed to be 50 nm. But the maximum value of the Ge concentration distribution may be in the range of 6 to 16% and the distance Xsige may be in the range of 20 to 60 nm. This is for the reason that if the thickness of the base layer in the portion from P0 to P1 where Ge is 0% is 10 nm or less, the hfe will be lowered. Thus, in case where the withstand voltage is 50V, the distance from P0 to P1 is preferable to be 20 nm. In Fig. 7, an analysis result of the Ge concentration and a current amplification factor of the SiGe transistor is shown. As understood from the analyzed values, in order for the current amplification factor (hfe) at ON-time saturated to Vce=0.10 [V] become 300 or more, the Ge concentration (molarity) is to be 6 to 16%. Further, if a current amplification factor of 400 or more is required, it is preferable that the Ge concentration is 8 to 13%.

As a variation example of the present actual example, the Ge concentration of the base layer 4 from the boundary between the emitter layer 5 and the base layer 4 to the position P1 in the base layer 4 may be 0 to 3%. In this case also, the Ge concentration from the position P1 to a boundary P2 between the collector layer 3 and the base layer 4 becomes a trapezoidal distribution of 6 to 16%, more preferably a trapezoidal distribution of 8 to 13%.

An N type impurity of the above-mentioned emitter layer 5 is P or As and an impurity concentration thereof is of a Gaussian distribution constructed such that a peak concentration is $1 \times 10^{20}/cm^3$, a concentration at a boundary position P0 between the emitter layer 5 and the base layer 4 is $5 \times 10^{16}/cm^3$ and a thickness of the emitter layer 5 is 1 $\mu$m. But this high concentration N type impurity may also be constructed such that the concentration distribution thereof is other than the Gaussian distribution, for example, a trapezoidal distribution in which the concentration is constant and a thickness thereof is 0.5 to 2 $\mu$m.

Also, if a synchronous rectifying circuit using a field effect transistor (MOSFET) connected to the first diode is employed in place only of the first diode circuit, a further high efficiency can be realized, although the switching speed of the filed effect transistor becomes slow and the ON time resistance becomes high. Also, if a current value of the DC/DC converter is smaller and a surge voltage at the turn-off time is small, the collector-emitter withstand voltage may be made smaller. This also applies to the second actual example described next.

(Second Actual Example)

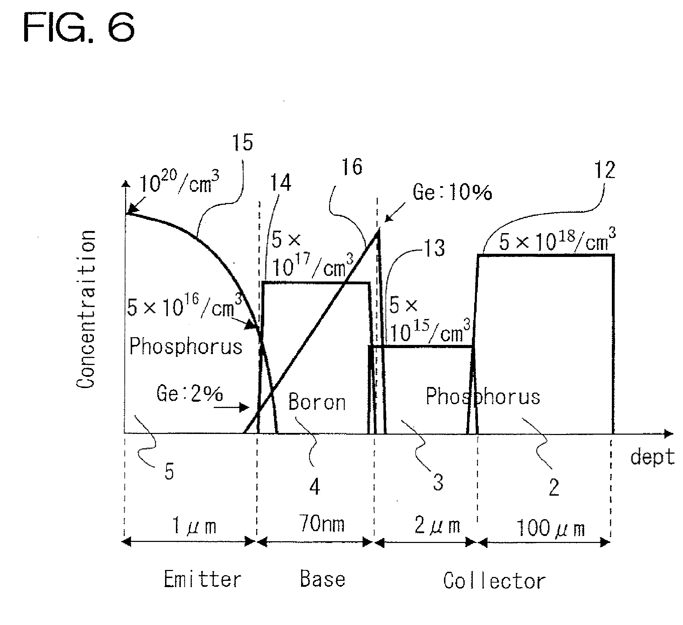

The SiGe transistor may also be such a transistor as to have a sloped Ge concentration, as shown in Fig. 6, as the Ge concentration distribution 16 of the base layer 4. In this concentration distribution, the Ge concentration becomes gradually higher toward the collector layer side from the emitter side to become the highest, that is, 10% in the present actual example around the boundary between the base layer 4 and the collector layer 3. The Ge concentration around the boundary between the base layer 4 and the emitter layer 5 is 2%. But the Ge concentration around the boundary between the base layer 4 and the collector layer 3 may also be 8 to 13% and the Ge concentration around the boundary between the base layer 4 and the emitter layer 5 may also be 0 to 3%.

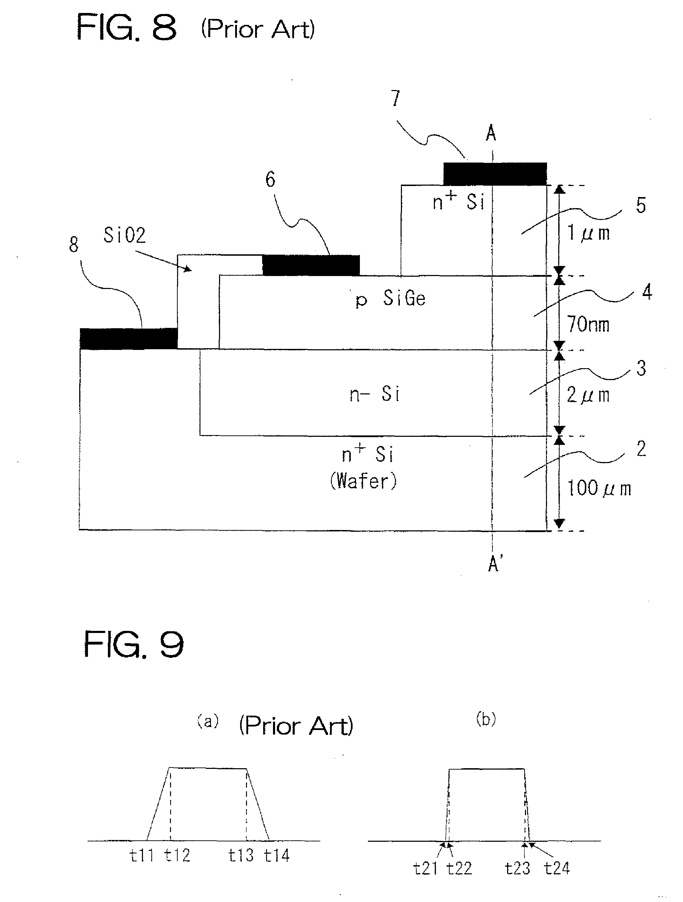

In the above description, while the structure of the entire transistor has been described as a longitudinal structure, the transistor structure may also be a lateral structure (planar structure) as shown in Fig. 8 having impurity concentrations shown in Figs. 5 and 6. Also, by using such a step-up and step-down type DC/DC converter as shown in Figs. 3(b) and (d), a small size and a light weight as well as a high efficiency of the device can be likewise realized.

Figs. 9(a) and (b) are schematic characteristic diagrams showing a comparison of the switch speed between a circuit of a conventional case and a circuit of the present actual example.

The conventional case shown in Fig. 9(a) is a step-down type DC/DC converter using a field effect transistor and the case of the present actual example shown in Fig. 9(b) is a step-down type DC/DC converter having the SiGe transistor. In the conventional case shown in Fig. 9(a), in order for the transistor to reach a steady ON state (the current streams: t12) from an OFF state (no current streams: t11), it takes 5 nsec or more.

To the contrary, in a product applied with the present actual example, as shown in Fig. 9(b), a turn-on time from an electric supply start t21 to a rise of the SiGe transistor is as short as 0.5 nsec, so that the loss caused by the transistor during this short time is small and the switching frequency of the DC/DC converter can be made as high as several tens MHz.

As the switching frequency can be made higher by several tens times as compared with the conventional case, if a ripple requirement specification of the output voltage is the same, the inductor and the smoothing condenser can be made smaller to 1 / several tens times in the reverse proportion to the switching frequency and the size of the device can be made remarkably small. Also, the inductance value of the inductor can be made smaller to 1/several tens times and a wire-wound resistance value thereof can also be made smaller to 1/several tens times. As the result of this, a resistance loss caused by the current streaming in the inductor can be reduced to 1/several tens times.

Effect of the embodiment of the present invention will be described with reference to an example of main specifications of the DC/DC converter built in a mobile phone, a notebook PC or the like.

The common specifications are as follows, that is, an input voltage is 3.6V, an output voltage is 3.0V, an output current is 0.5A and a voltage ripple of the output voltage is 10 mV or less. Values of the smoothing condenser and the inductor are decided so as to satisfy this ripple voltage specification. In the embodiment of the present invention, the SiGe transistor is used and the switching frequency is 20 MHz. Thereby, the inductor of 0.25 $\mu$H and the smoothing condenser of 0.05 $\mu$F will be sufficient in the embodiment of the present invention. On the other hand, in a conventional comparison example using the field effect transistor, the transistor having a switching frequency of 1 MHz, that is the maximum of the conventional field effect transistor, is used and the inductor of 5 $\mu$H and the smoothing condenser of 1 $\mu$F will be needed. For the first diode and the second diode, Shottky diodes are commonly used (for example, 10BQ015 made by IR Company).

Thus, in the embodiment of the present invention, a switching frequency of 20 MHz can be realized and the inductance and the smoothing condenser can be made smaller to 1/20 as compared with the conventional case.

By computer arithmetic operations, an ON time loss, a turn-on loss and a turn-off loss of the switching transistor, an ON time loss and a reverse recovery loss of the second diode and a resistance loss of the inductor were obtained by calculation. Efficiency of the converter of the embodiment of the present invention was 90% when the output current was 0.1A and 92% when the output current was 0.5A. Likewise, the efficiency of the comparison example was 80% when the output current was 0.1A and 83% when the output current was 0.5A.

According to the study by the inventor here, an area of the step-down type DC/DC converter of the above-mentioned specification can be made smaller to 1/10 or less. This is because of the effect, as mentioned above, that the inductor and the smoothing condenser of the smaller size have become usable by the present invention.

While the above description of the embodiment have been made on the basis of the step-down type DC/DC converter, the same effect can be obtained also by using the step-up type DC/DC converter as shown in Figs. 3(b) and (d) in which the same parts as the step-down type DC/DG converter are used but the connection structure only is different. Also, by using the step-down and step-up type DC/DC converter in which the step-down type and the step-up type are integrated according to the present invention, the same effect can be obtained.

The method of shortening the controllable transient time on DC / DC converter's output voltage is effective for the reduction of electric loss caused in the CPU through term that the CPU falls into sleep mode or returns from it. The method of the reducing the inductance value of the inductor of DC/DC converter is effective for the shortening the controllable transient time of DC/DC converter's output voltage.

The small inductance value of the inductor can let the transient time of DC / DC converter's output voltage _ which comes to be loss in the CPU through CPU returns from sleep mode to be shorter, because it can let bigger current through its inductor.

And the small inductance value of the inductor can let the capacitance value of smoothing condenser at output of DC/DC converter to be smaller, hereby the energy accumulated in the condenser which comes to be loss in CPU through the CPU falls in sleep mode.

As the converter, the one having the structure disclosed in the afore-mentioned Japanese patent application 2003-191551 "DC/DC converter and a module thereof" of the same inventor here will be most suitable. Herebelow, the inductance values of the DC/DC converter used in a PC, a mobile phone and a PDA are shown in the following table being itemized into "Most preferable example", "Preferable example" and "Suitable example";

Table 1

| Input Voltage | Most Preferable Example | Preferable Preferable Example | Suitable Suitable Example |
|---|---|---|---|
| PC (10 ~ 15V) | 0.04 ~ 0.15  0.04 ~ 0.15 | 0.1 ~ 0,375  0.1 ~ 0.375 | 0.2 ~ 0,75  0.2 ~ 0.75 |
| Mobile Phone, PDA (2.5 ~ 5V) (Rating 3.7V) | 0.10 ~ 2.0 | 0.25 ~ 5.0 | 0.5 ~ 10.0 |
| Unit [μH] | | | |

Where electric requirement specifications of the input voltage Vin, output voltage Vo, output DC current Io, peak value Ir of the ripple-containing DC current streaming in the inductor, etc. of the DC/DC converter are given, an inductance value L of the DC/DC converter is decided by the switching frequency f as shown by the following equation (A) and by making the switching frequency f larger, the inductance value L can be made smaller:

$$L = (Vin - Vo)Vo / (2 \cdot (Ir - Io) \cdot Vin \cdot f) \cdots \cdots (A)$$

Here, (Ir-Io) is an inductor ripple current amplitude value and if this value is made larger, the loss in the inductor core becomes large. Hence, if the switching frequency is to be made larger, the value (Ir-Io) is needed to be made as smaller as possible.

In order to set the time returning from the sleep state within 100 nsec, the inductance value L is obtained by the following equation (B);

$$\int (Vin / L)dt = C \cdot Vo + Io \cdots \cdots (B)$$

As a capacitance value C of the condenser becomes smaller, the charging time of the condenser is neglected and the following equation applies;

$$\int (Vin / L)dt \fallingdotseq Io$$

By using the above equation and the following DC/DC converter specifications, that is,

$$Vin = 10 \text{ to } 15 \text{ [V]}$$

$$W = 20 \text{ to } 55 \text{[W]}$$

$$Vo = 2.0 \text{[V]},$$

the L value range is obtained for two cases of (1) Vin = 10 [V] and W = 50 [W] and (2) Vin = 15 [V] and W = 20 [W], respectively,

$$(1) \; L = (Vin \cdot 100 \cdot 1E-9)/25$$

$$= (10 \cdot 100 \cdot 1.0E-9)/25$$

$$= 0.04/E-9[H]$$

$$= 0.04 \; [\mu H]$$

$$(2) \; L = (15 \cdot 100 \cdot E-9)/10$$

$$= 0.15 \; [\mu H]$$

As the DC/DC converter, the one constructed according to the afore-mentioned Japanese patent application 2003-191551 "DC/DC converter and a module thereof" of the same inventor here is used. Incidentally, the switching frequency f is obtained by using these L values and applying the condition of (Ir-Io) to the equation (A).

If the inductor ripple current amplitude value (Ir-Io) is made larger, the loss in the inductor core becomes large. Hence, if the switching frequency f is to be made larger, it is necessary that the value (Ir-Io) is made as small as possible.

Where the equation (A) is converted to the following equation (A');

$$f = (Vin-Vo)Vo/(L \cdot (2 \cdot (Ir-Io) \cdot Vin) \; \cdot \cdot \cdot \cdot \cdot \; (A')$$

and if (Ir-Io) = 0.025·Io is applied thereto;

(1) in the case of Vin = 10[V] and W = 50[W],

$$f = (10-2.0) \cdot 2.0/(0.04 \cdot E-6 \cdot 2 \cdot 0.025 \cdot 25 \cdot 10)$$

$$= 32 \cdot E6$$

$$= 32 \; [MHz], \; and$$

(2) in the case of Vin = 15[V] and W = 20[W]

$$f = (15-2.0)2.0/(0.15 \cdot E-6 \cdot 2 \cdot 0.025 \cdot 10 \cdot 15)$$

$$= 23.6 \cdot E6$$

$$= 23.6 \; [MHz]$$

Likewise, from such use conditions as

$$Vin = 2.5 \; to \; 5.0[V]$$

$$W = 0.5 \text{ to } 5[W]$$

$$Vo = 2.0[V],$$

the L value to satisfy the return time from the sleep state of 100 nsec is obtained for two cases of (3) Vin = 2.5[V] and W = 5[W] and (4) Vin = 5[V] and W = 0.5[W], respectively;

(3) For the conditions of Vin = 2.5[V] and W = 5[W];

$$L = (2.5 \cdot 100) \cdot 1E-9) / 2.5[H]$$

$$= 0.10 \, [\mu H]$$

$$= 100 \, [nH]$$

(4) For the conditions of Vin = 5[V] and W = 0.5[W],

$$L = (5.0 \cdot 100) \cdot 1E-9) / 0.25[F]$$

$$= 2.000 \, [\mu H]$$

$$= 2,000 \, [nH]$$

Thus, the range of the value L becomes L = 0.1 to 2.0 [$\mu$H].

Where the value (Ir-Io) = 0.025-Io, the switching frequency f is obtained by the equation (A') as follows;

(3) In the case of Vin = 2.5[V] and W = 5[W],

$$f = (2.5-2.0)2.0 / (0.1 \cdot E-6 \cdot 2 \cdot 0.025 \cdot 2.5 \cdot 2.5)$$

$$= 32 \cdot E6 \, [Hz]$$

$$= 32 \, [MHz], \text{ and}$$

(4) In the case of Vin = 5[V] and W = 0.5[W],

$$f = (5.0-2.0)2.0 / (2.0E-6 \cdot 2 \cdot 0.025 \cdot 0.25 \cdot 5.0)$$

$$= 48 \cdot E6 \, [Hz]$$

$$= 48 \, [MHz]$$

If an inductance value of the inductor in the conventional art is to be designed based on the generally known document "Simple Design of Transistor Circuits" of CQ Publishing Co. (Non-Patent Document 4), it is designed as follows;

The inductance value L of the inductor of the DC/DC converter is decided by the equation (A) using the input voltage Vin, output voltage Vo, output DC current Io, peak value Ir of the ripple-containing DC current streaming in the inductor and switching frequency f whose maximum value in conventional art is 1.0 [MHz].

Ir is mainly decided based on to what extent the AC loss caused in the inductor core (iron core) is allowable. The larger becomes the value (Ip-Io), the more increases the AC loss of the core. Usually, it is so set that Ip-Io = (0.01 to 0.05)-Io.

On this basis,

$$L = (Vin-Vo)Vo/(2 \cdot 0.025 \cdot Io \cdot Vin \cdot f)$$

$$= (Vin-Vo)Vo/(0.05 \cdot Io \cdot Vin \cdot f)$$

Supposing that the CPU requires a maximum current of 25[A] at a maximum voltage of 2.10[V] and if an input of the D C / DC converter that supplies this maximum current is set to a DC of 15[V], L is calculated as follows;

$$L = (15-2.10) \cdot 2.10/(0.05 \cdot 25 \cdot 15 \cdot 1E6)$$

$$= 1.81 \ [\mu H]$$

Where Vr is a ripple component included in the output voltage, a condenser capacitance C is decided by the following equation (C), in which the number of 5 of (Vr/ 5) included in the equation (C) has been selected by the inventor here;

$$C = (Vin-Vo)Vo/(8 \cdot L \cdot f \cdot f \cdot Vin \cdot (Vr/5)) \cdots \cdots (C)$$

If Vr is set to 2.1 [mV], that is, 0.1% of Vo,

$$C = (15-2.10) \cdot 2.10/(8 \cdot 1.81 \cdot 1E-6 \cdot E12 \cdot 15 \cdot 2.1E-3/5)$$

$$= 297.8 \ [\mu F]$$

Where t is a time until the CPU returns to a maximum arithmetic operation in which a supply current is 25[A] at a supply voltage of 2.10[V] from a sleep state (sleep off) in which the supply voltage and supply current from the DC/DC converter are 0[V] and 0[A], respectively, the following equation applies:

$$\int (Vin/L)dt = C \cdot Vo + 25$$

This equation is converted as follows;

$$(15/(1.81 \cdot 1E-6)) \cdot t = 297.8 \cdot 1E-6 \cdot 2.10 + 25$$

Hence, t is calculated as follows;

EP 1 645 941 A2

$$t = (297.8 \cdot 1E{-}6 \cdot 2.10{+}25)/(15/(1.81 \cdot 1E{-}6))$$

$$= 3.01 \ [\mu sec]$$

Supposing that the CPU ceases the arithmetic operation during this short time until the supply voltage is stabilized, the energy supplied by the DC/DC converter becomes a loss. As the current of the DC/DC converter increases in proportion to the time, this loss becomes equal to the energy supplied from a DC/DC converter primary side during this transition time. Thus, the loss is calculated as follows;

$$15 \cdot (25/2) \cdot 3.01 \cdot 1E{-}6 = 564.7 \ [\mu J]$$

$$= 0.5647 \ [mJ]$$

If the return from sleep state is repeated by a frequency of 100 times per second, the CPU internal loss becomes 0.05647[W]. If the frequency is 1,000 times per second, the CPU internal loss is 0.5647[W] and if the frequency is 10,000 times per second, the CPU internal loss amounts to 5.647[W].

When the CPU enters the sleep state from the maximum arithmetic operation state (sleep on), the following total energy accumulated in the inductor and condenser becomes the maximum loss in CPU;

$$(1/2) \cdot (C \cdot Vo \cdot Vo + L \cdot Io \cdot Io)$$

$$= (1/2) \cdot (148.9 \cdot 1E{-}6 \cdot 2.10 \cdot 2.10 + 1.81 \cdot 1E{-}6 \cdot 25 \cdot 25)$$

$$= (1/2) \cdot (312.69 + 1131) \cdot 1E{-}6$$

$$= 721.6E{-}6$$

$$= 721 \ [\mu J]$$

In case where the ON and OFF operation to and from the sleep state on the above-mentioned condition is carried out by one time, the total loss in CPU per one time is as follows:

$$546 + 721 = 1267 \ [\mu J]$$

If the ON and OFF operations of the sleep state are repeated by a frequency of 100 times per second, the total loss is 0.1267[W]. If the frequency is 1,000 times per second, the total loss is 1.267[W] and if the frequency is 10,000 times per second, the total loss is 12.67[W].

As the power consumed by the CPU during a continuous maximum arithmetic operation time is 2.10[V] x 25 [A] = 52.5[W], not only the above-mentioned losses are remarkably large, but also a heat generation in the CPU becomes large and a large cooling device will be needed.

Likewise, a case where the power is 0.5 to 2.0[W] will be described as a second example.

The inductance value L of the inductor of the DC/DC converter is decided by the equation (A) using the input voltage Vin, output voltage Vo, output DC current Io, peak value Ir of a ripple-containing DC current streaming in the inductor and switching frequency f whose maximum value in conventional art is 1.0 [MHz].

Ir is mainly decided based on to what extent the high frequency AC loss caused in the inductor core (iron core) is allowable. The larger becomes the value (Ip-Io), the more increases the AC loss of the core. Usually, it is so set that Ip-Io = (0.01 to 0.05).Io.

On this basis,

$$L = (Vin-Vo)Vo/(2 \cdot 0.025 \cdot Io \cdot Vin \cdot f)$$

$$= (Vin-Vo)Vo/(0.05 \cdot Io \cdot Vin \cdot f)$$

Supposing that the CPU requires a maximum current of 2.5[A] at a maximum voltage of 2.10[V] and if an input of the DC/DC converter that supplies this maximum current is set to a DC of 5[V], L is calculated as follows;

$$L = (5-2.10) \cdot 2.10/(0.05 \cdot 2.5 \cdot 50 \cdot 1E6)$$

$$= 9.744 \ [\mu H]$$

Where Vr is a ripple component included in the output voltage, a condenser capacitance C is decided by the equation (C) in which the number of 5 of (Vr/5) included in the equation (C) has been selected by the inventor here.
If Vr is set to 2.1 [mV], that is, 0.1% of Vo,

$$C = (5.0-2.10) \cdot 2.10/(8 \cdot 9.744 \cdot 1E-6 \cdot E12 \cdot 5.0 \cdot 2.1E-3/5)$$

$$= 53.75 \ [\mu F]$$

Where t is a time until the CPU returns to a maximum arithmetic operation in which a supply current is 2.5[A] at a supply voltage of 2.00[V] from a sleep state (sleep off) in which the supply voltage and supply current from the DC/DC converter are 0[V] and 0[A], respectively, the following equation applies:

$$\int (Vin/L)dt = C \cdot Vo + 2.50$$

This equation is converted as follows;

$$(5.0/(9.74 \cdot 1E-6)) \cdot t = 53.75 \cdot 1E-6 \cdot 2.10 + 2.50$$

Hence, t is calculated as follows;

$$t = (9.74 \cdot E-6) \cdot (53.75 \cdot 1E-6 \cdot 2.10 + 2.50)/5.0$$

$$= 4.87 \ [\mu sec]$$

Supposing that the CPU ceases the arithmetic operation during this short time until the supply voltage is stabilized, the energy supplied by the DC/DC converter becomes a loss. As the current of the DC/DC converter increases in proportion to the time, this loss becomes equal to the energy supplied from a DC/DC converter primary side during this transition time. Thus, the loss is calculated as follows;

$$5.0 \cdot (2.5/2) \cdot 4.87 \cdot 1E-6 = 30.44 \ [\mu J]$$

$$= 0.0304 \ [mJ]$$

If the losses are repeated by a frequency of 1,000 times per second, the CPU internal loss becomes 0.0304 [W]. If the frequency is 10,000 times per second, the CPU internal loss is 0.304[W].

When the CPU enters the sleep state from the maximum arithmetic operation state (sleep on), the following total energy accumulated in the inductor/condenser becomes the maximum loss;

$$(1/2) \cdot (C \cdot Vo \cdot Vo + L \cdot Io \cdot Io)$$

$$= (1/2) \cdot (53.75 \cdot 1E-6 \cdot 2.10 \cdot 2.10 + 9.74 \cdot 1E-6 \cdot 2.5 \cdot 2.5)$$

$$= (1/2) \cdot (237 + 60.89) \cdot 1E-6$$

$$= 148.9E-6$$

$$\approx 148.9 \ [\mu J]$$

In case where the ON and OFF operation to and from the sleep state on the above-mentioned condition is carried out by one time, the total loss per one time is as follows:

$$30.4 + 148.9 = 179.3 \ [\mu J]$$

If the ON and OFF operations of the sleep state are repeated by a frequency of 1,000 times per second, the total loss is 0.1793[W]. If the frequency is 10,000 times per second, the total loss is 1.793[W].

As the power consumed by the CPU during the continuous maximum arithmetic operation time is 2.10[V] x 2.5 [A] = 5.25[W], not only the above-mentioned losses are remarkably large, but also a heat generation in the CPU becomes large and a large cooling device will be needed.

Usually, in these information processing electronic devices, a larger part of the maximum supply power converted per one DC/DC converter is several tens W or so. While an absolute value of the internal loss per one device is small, as a huge number of the devices are used in the entire society, even if a loss reduction of several W per one device is attained, it will be extraordinarily large in the entire society and a remarkable contribution to the improvement of the global environment can be expected.

By carrying out the sleep function installed in the CPU or information processing integrated circuit by the maximum frequency for carrying out the arithmetic processing, a power saving effect of the information processing electronic device can be efficiently attained. By this power saving effect, the cooling device of the CPU or information processing electronic device can be made smaller and light weight. Further, if the information processing electronic device has a battery as an energy source for operation, an effect to increase the operation time by the same battery can be obtained.

According to the present invention, by combination of the function to frequently perform the sleep state, not only an energy saving of an installation type electronic device using an AC adapter to be connected to a commercial electric source but also small size and a fan elimination of a cooling device as well as a light weight of the entire device can be realized. Also, if the information processing electronic device has a battery as an energy source, both of an elongation of a battery operation time and a light weight of the battery can be realized.

A power saving effect according to the embodiment of the present invention will be described in comparison with the conventional case.

A case where the present invention is applied to a PC or the like having a power capacity of 20 to 50[W] will be described. If the inductor is set to a size of 0.06 [$\mu$H] that is 1/30 of a conventional 1.81 [$\mu$H], the time to return to the maximum arithmetic processing operation from the sleep state can be reduced to 100 nsec.

Also, a loss reduction effect in the transition time to enter the sleep state and to return from the sleep state will be described. Because the capacitance of the condenser is 4.99 [$\mu$F] derived by equation (C), a CPU internal loss per one time in case of returning to the maximum arithmetic processing operation from the sleep state is calculated as follows;

$$15 \cdot (25/2) \cdot 0.1 \cdot 1E\text{-}6 = 18.82 \ [\mu J]$$

The CPU internal loss per one time in case of entering the sleep state from the maximum arithmetic processing operation is:

$$(1/2) \cdot ((1.81 \cdot 1E\text{-}6)/30) \cdot 25 \cdot 25 + (4.99 \cdot E\text{-}6) \cdot 2.10 \cdot 2.10)$$

$$\doteqdot (1/2) \cdot (37.71 + 21.87) \cdot 1E\text{-}6$$

$$= 29.79 \cdot 1E\text{-}6$$

$$= 29.79 \ [\mu J]$$

The total of these losses is 18.82 + 29.79 = 48.61 [$\mu J$].

As compared with the total loss of 1.2867 [mJ] of the above-mentioned conventional case in which the inductor is 1.81 [$\mu H$], the total loss can be reduced to 1/26.4 times by the present invention. In case of the sleep frequency of 100 times per second, the loss is 4.86 [mW]. In the sleep frequency of 1,000 times per second, the loss is 48.6 [mW] and even in the sleep frequency of 10,000 times per second, the loss is 486 [mW]. In the sleep frequency of 10,000 times per second, the loss can be reduced to 0.9% of the CPU maximum arithmetic power consumption of 52.5[W]. On the other hand, in the conventional art, the loss is as large as 12.67[W], as mentioned above. This is 24.1% of the CPU maximum arithmetic power consumption and is remarkably large.

A case where the present invention is applied to a mobile phone or the like having a power capacity of 0.5 to 5[W] will be described. If the inductor is set to a size of 0.195 [$\mu H$] that is about 1/50 of a conventional 9.744 [$\mu H$], the time to return to the maximum arithmetic processing operation from the sleep state can be reduced 100 nsec from a conventional 4.87 [$\mu sec$].

Also, a power saving effect according to the present invention will be described in comparison with a conventional case. In the DC/DC converter of the afore-mentioned Japanese patent application 2003-191551 "DC/DC converter and a module thereof", with respect to a case where an inductor value is set to 0.195 [$\mu H$] and a switching frequency to 50 MHz, a loss reduction effect in the transition time to enter the sleep state and to return from the sleep state will be described.

With respect to a case where the power is 5[W], the conventional inductance value [$\mu H$] and the switching frequency of 1 MHz are changed to an inductance value of 0.195 [$\mu H$] and a switching frequency appropriate to be used in the present invention. A CPU internal loss per one time in case of returning to the maximum arithmetic processing operation from the sleep state is calculated as follows:

$$5.0 \cdot (2.5/2) \cdot 0.1 \cdot 1E\text{-}6 = 0.625 \ [\mu J]$$

Because the capacitance of the condenser is 1.119 [$\mu F$] derived by equation C, the CPU internal loss per one time in case of entering the sleep state from the maximum arithmetic processing operation is:

$$(1/2) \cdot ((0.195 \cdot 1E\text{-}6)) \cdot 2.5 \cdot 2.5 + 1.119 \cdot E\text{-}6 \cdot 2.0 \cdot 2.0)$$

$$\doteqdot (1/2) \cdot (1.219 + 4.476) \cdot 1E\text{-}6$$

$$= 2.848 \cdot 1E\text{-}6$$

$$= 2.848 \ [\mu J]$$

The total of these losses is 0.625 + 2.848 = 3.472 [$\mu J$].

As compared with the total loss of f 79.3 [μJ] per one time of the sleep mode (ON and Return) of the conventional art, as mentioned before, the total loss can be reduced to 1/51 times by the present invention and in the sleep frequency of 10,000 times per second, the loss can be reduced to 0.7% of the CPU maximum arithmetic power consumption of 5.0[W].

As the converter, the one having the structure disclosed in the afore-mentioned Japanese patent application 2003-191551 "DC/DC converter and a module thereof of the same inventor here will be most suitable. Herebelow, the inductance values of the DC/DC converter used in a PC, a mobile phone and a PDA are shown in the above Table 1 being itemized into "Most preferable example", "Preferable example" and "Suitable example".

By using inductance value whose range is shown in "Most preferable example", the return time from sleep -ON state can come to be less than 100 nsec and loss generated at transient term of return from sleep and coming into it in CPU in condition of high frequency sleep operation as 10,000 times per second is less than 1% against rated power of CPU. These are most preferable advantages.

By using inductance value whose range are shown in "Preferable example", the return time from sleep -ON state is able to be less than 250 nsec of favorable for actual use and the loss generated at transient term of return from sleep and coming into it in CPU can come less than 2% against rated power of CPU in condition of high frequency sleep operation as 10,000 times per second. These are preferable effects.

By value in "Suitable example", the return time from sleep -ON state can come to be less than 500 nsec and the loss generated at transient term of return from sleep and coming into it in CPU in condition of high frequency sleep operation as 10,000 times per second is less than5% against rated power of CPU. These are acceptable good effects.

Total loss in CPU includes its rated power and the loss generated at transient term of return from sleep and coming into it in CPU.

Inductance value of smaller than those shown in Table 1 is unnecessary in actual use, because the difference of numerical value of the loss on Watt from those of "Most preferable example" in Table 1 is small like as negligible.

Using inductance value larger than those shown in Table, effects for the return time from sleep state and the loss reduction are few.

## Claims

1. An information processing electronic device comprising a CPU and/or an information processing integrated circuit, an information input means, an information display unit and an information recording medium (memory) as well as at least one DC/DC converter which includes at least one SiGe bipolar transistor for switching operation, supplying these components with a power, **characterized in that** while at least one of said CPU and information processing integrated circuit is frequently applied with a sleep control, said DC/DC converter supplying said CPU and/or information processing integrated circuit with the power has a capacity to put out a power of 20 to 50W as well as has at least one inductor of said DC/DC converter, said at least one inductor being so constructed that an equivalent inductance value thereof is 0.04 to 0.75 μH; when said DC/DC converter has a capacity to put out a power of 20W, said at least one inductor is so constructed that the equivalent inductance value thereof is 0.15 to 0.75 μH; and when said DC/DC converter has a capacity to put out a power of 50W, said at least one inductor is so constructed that the equivalent inductance value thereof is 0.04 to 0.2 μH.

2. An information processing electronic device comprising a CPU and/or an information processing integrated circuit as well as a DC/ DC converter which includes at least one SiGe bipolar transistor for switching operation, supplying these components with a power, **characterized in that** said DC/DC converter has at least one inductor of said DC/DC converter; when said DC/DC converter is constructed so as to have a capacity to put out a small power of 0.5 to 5W, said at least one inductor is so constructed that an equivalent inductance value thereof has its lower limit value elevated so as to be 0.1 to 10.0 μH; when said DC/DC converter has a capacity to put out a power of 0.5W, said at least one inductor is so constructed that the equivalent inductance value thereof is 2.0 to 10.0 μH; and when said DC/DC converter has a capacity to put out a power of 5W, said at least one inductor is so constructed that the equivalent inductance value thereof is 0. 1 to 0.5 μH.

3. An information processing electronic device as claimed in Claim 1 or 2, **characterized in that** said DC/DC converter and a load to which said DC/DC converter supplies the power are connected to each other with no switching element nor switching circuit being interposed therebetween.

# FIG. 1

# FIG.2

(a)

(b)

# FIG. 3

**(a)**

L  10  Q1 SiGeTr  D  C  Input Vin  Output Vout

**(b)**

L  10  D  Q1 SiGeTr  C  Input Vin  Output Vout

**(c)**

D2  Q1 SiGeTr  10  L  D  C  Input Vin  Output Vout

**(d)**

L  10  D  D2  Q1 SiGeTr  C  Input Vin  Output Vout

# FIG. 4

A

7

5

n$^+$ Si

1 $\mu$m

6

4

p SiGe

70nm

3

n- Si

2 $\mu$m

2

n$^+$ Si
(Wafer)

100 $\mu$m

A'

8

# FIG. 5

# FIG. 6

# FIG. 7

**Current Amplification Factor**

# FIG. 8 (Prior Art)

# FIG. 9

EP 1 645 941 A2

# FIG. 10   (Prior Art)

(a)

(b)